Europäisches Patentamt

(19) European Patent Office

Office européen des brevets

(11) EP 0 547 860 B1

## (12) EUROPEAN PATENT SPECIFICATION

(45) Date of publication and mention
of the grant of the patent:
**19.02.1997 Bulletin 1997/08**

(51) Int. Cl.$^6$: **B23K 1/012**

(21) Application number: **92311398.9**

(22) Date of filing: **14.12.1992**

(54) **Soldering method and apparatus**

Lötverfahren und -vorrichtung

Méthode et appareil de brasage

(84) Designated Contracting States:
**BE DE FR GB IT NL**

(30) Priority: **16.12.1991 JP 332279/91**

(43) Date of publication of application:
**23.06.1993 Bulletin 1993/25**

(73) Proprietor: **OSAKA SANSO KOGYO LIMITED**
**Osaka 593 (JP)**

(72) Inventors:
• **Takenaka, Iku**
**Otsu City, Shiga Pref. (JP)**
• **Tsukimoto, Yoshiharu**
**Sanda City, Hyogo Pref. (JP)**
• **Onishi, Hiromitsu**
**Itami City, Hyogo, (JP)**

(74) Representative: **Wickham, Michael**
**c/o Patent and Trademark Department**
**The BOC Group plc**
**Chertsey Road**
**Windlesham Surrey GU20 6HJ (GB)**

(56) References cited:
**EP-A- 0 145 975**          **EP-A- 0 337 008**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a method and apparatus for soldering, for example, electronic parts.

Hitherto, soldering of electronic parts has often been conducted in an atmosphere of air, and it has therefore been necessary to use a flux having high activities. Such a high-activity flux is very effective in purifying the area of joint of parts and a base metal before soldering and also effective against reoxidation by oxygen during soldering and hence capable of providing excellent soldering quality. However, the flux remaining after soldering involves problems such as corrosion of wiring patterns and deterioration of insulation quality due to moisture absorption. To solve these problems, it has been necessary to clean off the flux residue with Freon, thrichlorethane, etc. However, the cleaning process requires cost and time and also leads to environmental disruption; therefore, with regard to use many cleaning agents are regulated.

Under these circumstances, a low-activity flux which provides soldering of high reliability without the need to clean off the flux residue has been developed, and a soldering method that employs an ultra-low activity flux for soldering carried out in an inert gas, for example, nitrogen gas has also recently been put to practical use.

It has been common practice to evaporate liquefied nitrogen gas in order to supply nitrogen gas used for soldering. However, this nitrogen gas supply method is relatively costly. There are also cases where high-purity (low oxygen concentration) nitrogen gas such as liquefied nitrogen gas is not needed. For these reasons, there has been an increasing tendency to use a PSA (Pressure Swing Adsorption) or membrane type nitrogen gas generator.

Nitrogen gas is produced from such sources at ambient temperature. Therefore, this nitrogen gas cools the substrate and parts, which are to be soldered, preventing the substrate and the parts from being sufficiently preheated, and also causing the temperature to differ in different localities even in the same substrate. Consequently, there has been a tendency for the soldered joins to be of uneven quality.

EP-A-0 145 975 discloses a soldering method and apparatus including a source of inert (nitrogen) gas, hydrogen and gaseous oxygen impurity, at about ambient temperature. The gas is passed through a catalyst thereby to carry out a reaction of the gaseous oxygen impurity in the gas stream with the hydrogen gas so as to remove all or part of the oxygen gas from the inert gas and to raise the temperature of the gas stream by virtue of the heat of said reaction. The heated gas is subsequently introduced into the soldering apparatus and assists in providing an atmosphere suitable for soldering. Unfortunately, this apparatus requires the use of additional conduction heater elements so as to facilitate raising of the atmosphere temperature to that required for soldering

According to the present invention there is provided a soldering method for soldering components in a heated and substantially oxygen free atmosphere, comprises the steps of forming an inert gas stream containing gaseous oxygen impurity and a gaseous hydrogen stream, both at about ambient temperature, passing the streams through a container housing an oxidation catalyst thereby to carry out a reaction of the gaseous oxygen impurity in the inert gas with the hydrogen gas so as to remove all or part of the oxygen gas from the inert gas characterised in the temperature of the gas is raised to that required during a subsequent soldering step substantially by the heat generated during the reaction and said heated gas is introduced into a soldering apparatus to heat components situated therein.

The invention also provides soldering apparatus comprising a source at about ambient temperature of inert gas containing gaseous impurity; a source at about ambient temperature of hydrogen; a container housing an oxidation catalyst communicating with both sources whereby, in operation, to carry out a reaction of the gaseous oxygen impurity in the inert gas with the hydrogen gas so as to remove all or part of the oxygen gas from the inert gas and to raise the temperature of the gas, a soldering chamber in communication with the outlet from said container and means for introducing said heated gas into the soldering chamber, characterised in that said catalyst is configured for raising the temperature of the gas substantially to that required during a subsequent soldering step substantially by the heat generated during the reaction and by means for introducing the heated gas into the chamber to heat components situated therein.

The method and apparatus according to the invention will now be described by way of example with reference to the accompanying drawings, in which:

Figure 1 shows schematically a soldering apparatus in the prior art;

Figure 2 shows schematically a soldering apparatus in a preferred embodiment of the present invention;

Figure 3 shows a temperature profile in the apparatus according to the conventional method; and

Figure 4 shows a temperature profile in the apparatus according to the present invention.

A nitrogen gas generator is shown at 1. A nitrogen gas flowmeter is shown at 2-a. A hydrogen gas flowmeter is shown at 2-b. Soldering apparatus (including a soldering chamber) is shown at 3. A hydrogen gas supply equipment is shown at 4. A catalyst container is shown at 5.

An inert gas, e.g. nitrogen gas, which is generated by using a PSA or membrane-type nitrogen gas generator, containing for example, 0.5% to 1% by volume of oxygen impurity, and hydrogen gas supplied from a hydrogen gas supply means are mixed together in a predetermined ratio. Thereafter, the resulting mixture is passed through a catalyst container filled with an oxidising catalyst having high activities to remove all or part of the oxygen from the inert gas by the exothermic reaction of

$$O_2+2H_2 \rightarrow 2H_2O.$$

In addition, the gas is heated by the exothermic reaction. Typically, if nitrogen gas containing 1% oxygen is allowed to react with hydrogen in the presence of catalyst, the gas temperature rises to about 160°C. Thus, the required preheating for the gas is attained.

Examples of catalyst usable for the reaction of $O_2$ with $H_2$ include those which comprise noble metals, such as platinum, palladium, rhodium, which are carried on $A1_2O_3$, represented, for example, by DEOXO (trade name), and those which comprise oxides of transition elements such as Mn, Cu, Ni.

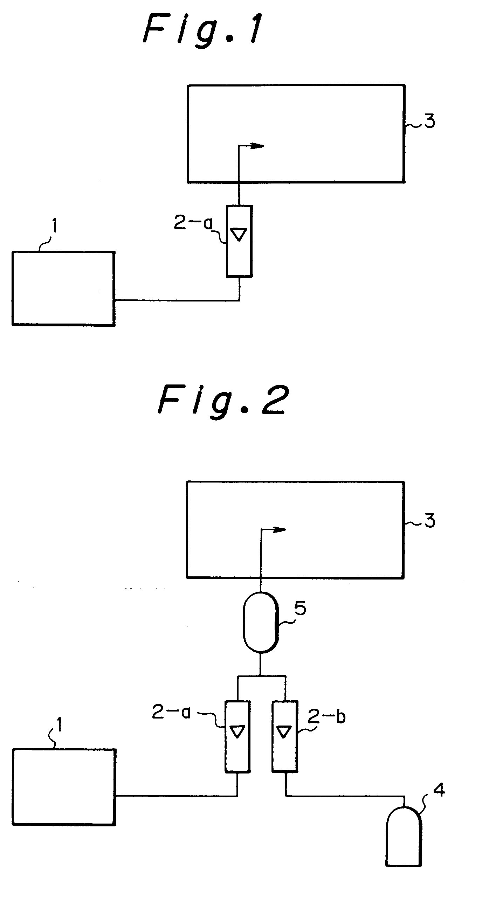

The arrangement of a conventional soldering apparatus employing a nitrogen gas generator is shown in Figure 1. Nitrogen gas that is generated from a nitrogen gas generator 1 is introduced into a soldering apparatus 3 through the flowmeter 2-a. Accordingly, the introduced nitrogen gas contains oxygen gas at a concentration corresponding to the capacity of the nitrogen gas generator, and it is at ambient temperature.

On the other hand, according to a preferred embodiment of the present invention, nitrogen gas that is generated from the nitrogen gas generator 1 is passed through the flowmeter 2-a, while hydrogen gas that is supplied from hydrogen gas supply equipment 4 is passed through the flowmeter 2-b, as shown in Figure 2, so that the nitrogen gas and the hydrogen gas are mixed together in a predetermined ratio. Then, the resulting mixture is introduced into a soldering apparatus 3 through a catalyst container 5. The gas coming out of the catalyst container 5 has been preheated by the exothermic reaction and contains no oxygen or has a predetermined $O_2$ concentration. The oxygen concentration in nitrogen gas generated from the generator 1 is controlled by adjusting the flow rates of the gases passed through the flowmeters 2-a and 2-b.

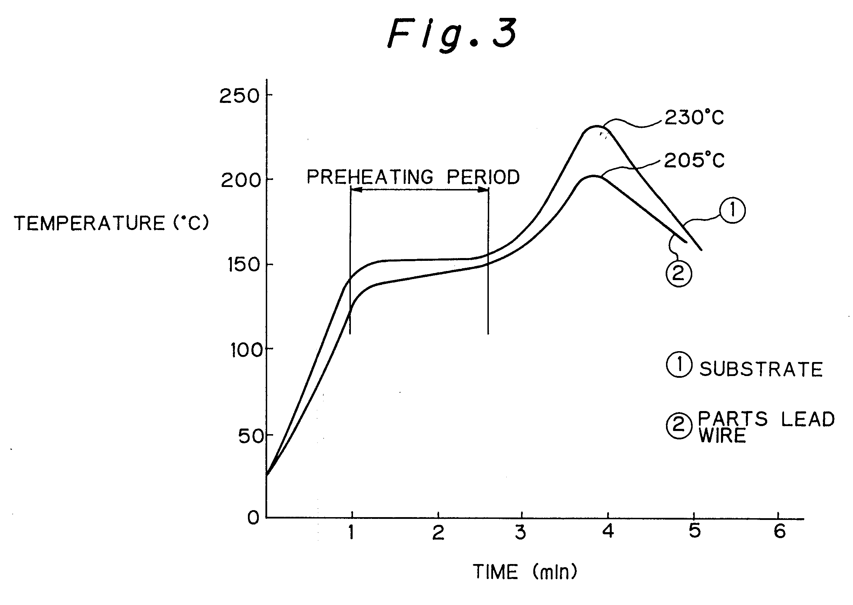

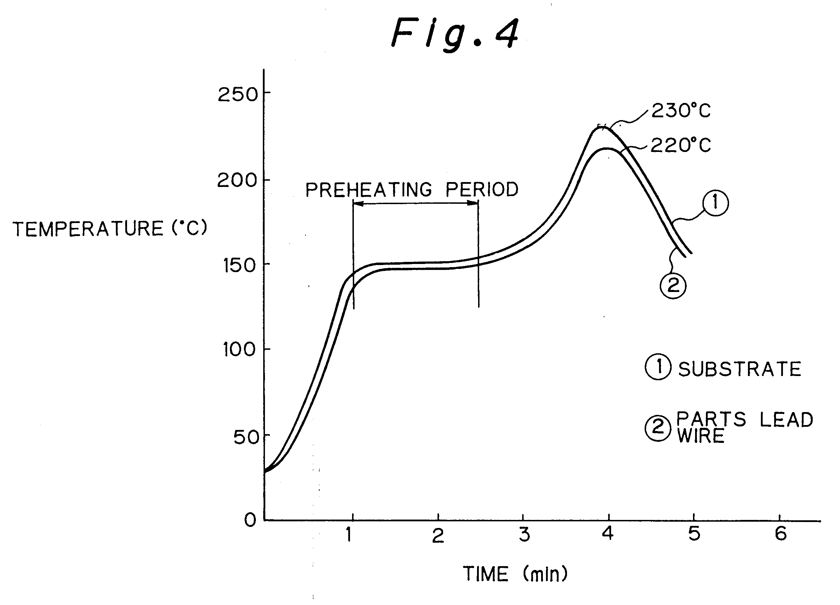

With a glass-epoxy member used as a substrate for micro-electronic components to be soldered, a temperature difference in the same substrate was measured. Figure 3 shows a temperature profile in the case of the conventional method, and Figure 4 shows a temperature profile in the case of the method of the present invention.

In the conventional method the temperature difference at the peak is 25°C, whereas in the present invention the temperature difference is 10°C. In the present invention, the temperature difference in the substrate during the preheating period is also small, and thus the substrate is heated uniformly.

In the present invention, the oxygen gas in the inert gas which reacts with hydrogen gas is not a gas that is added to the inert gas on purpose. Oxygen gas having a certain concentration is inevitably contained in an inert gas which is generated from an inert gas generator in the largest quantity and which is low in terms of the electric power unit, that is, the most economical. In the present invention, the incidental oxygen gas is allowed to react with hydrogen so as to heat the inert gas as well as to remove oxygen from the inert gas. It is a matter of course that the present invention includes a form in which a small amount of oxygen is added to the inert gas before the reaction with hydrogen. The gas mixture passing into the soldering chamber 3 will include the water vapour formed as a result of the reaction between hydrogen and oxygen and may also include excess hydrogen.

## Claims

1. A soldering method for soldering components in a heated and substantially oxygen free atmosphere, comprises the steps of forming an inert gas (1) stream containing gaseous oxygen impurity and a gaseous hydrogen stream (4), both at about ambient temperature, passing the streams through a container (5) housing an oxidation catalyst thereby to carry out a reaction of the gaseous oxygen impurity in the inert gas with the hydrogen gas so as to remove all or part of the oxygen gas from the inert gas (1) characterised in that the temperature of the gas is raised to that required during a subsequent soldering step substantially by the heat generated during the reaction and said heated gas is introduced into a soldering apparatus to heat components situated therein.

2. A method according to Claim 1, characterised in that said catalyst (5) is a noble metal catalyst.

3. A method according to Claim 1 or Claim 2, wherein said inert gas and said hydrogen gas are introduced into said catalyst container (5) after being mixed together in a predetermined ratio.

4. A method according to any one of the preceding claims, characterised in that the oxygen gas concentration in said inert gas is in the range of from 0.5% to 1%.

5. A method according to any one of the preceding claims, characterised in that the inert gas stream is formed by separating nitrogen from air by pressure swing adsorption or with membranes.

6. A method according to any one of the preceding claims, characterised in that the inert gas stream is heated to about 160°C by virtue of said reaction.

7. Soldering apparatus comprising a source (1) at about ambient temperature of inert gas containing gaseous impurity; a source at about ambient temperature of hydrogen (4); a container (5) housing an oxidation catalyst communicating with both sources whereby, in operation, to carry out a reaction of the gaseous oxygen impurity in the inert gas with the hydrogen gas so as to remove all or part of the oxygen gas from the inert gas and to raise the temperature of the gas, a soldering chamber (3) in communication with the outlet from said container (5) and means for introducing said heated gas into the soldering chamber (3), characterised in that said catalyst is configured for raising the temperature of the gas substantially to that required during a subsequent soldering step substantially by the heat generated during the reaction and by means for introducing the heated gas into the chamber (3) to heat components situated therein.

8. Apparatus according to claim 7, characterised in that the source of inert gas is a PSA or membrane-type nitrogen generator (1,4).

**Patentansprüche**

1. Lötverfahren zum Löten von Komponenten in einer erhitzten und im wesentlichen sauerstofffreien Atmosphäre, das die Schritte umfaßt, einen Strom eines inerten Gases (1), das eine gasförmige Sauerstoffverunreinigung enthält, und einen gasförmigen Wasserstoffstrom (4) zu erzeugen, die beide etwa Umgebungstemperatur aufweisen, Hindurchführen der Ströme durch einen Behälter (5), der einen Oxidationskatalysator enthält, wodurch eine Reaktion der gasförmigen Sauerstoffverunreinigung in dem inerten Gas mit dem Wasserstoffgas durchgeführt wird, wodurch die Gesamtmenge oder ein Teil des Sauerstoffgases aus dem inerten Gas (1) entfernt wird, dadurch gekennzeichnet, daß die Temperatur des Gases im wesentlichen durch die Hitze, die während der Reaktion erzeugt wird, auf die Temperatur erhöht wird, die während eines nachfolgenden Lötschritts erforderlich ist, und daß das erhitzte Gas in eine Lötvorrichtung eingeführt wird, um die darin angeordneten Komponenten zu erhitzen.

2. Verfahren nach Anspruch 1, dadurch gekennzeichnet, daß der Katalysator (5) ein Edelmetallkatalysator ist.

3. Verfahren nach Anspruch 1 oder Anspruch 2, worin das inerte Gas und das Wasserstoffgas in den Katalysatorbehälter (5) eingeführt werden, nachdem sie in einem vorbestimmten Verhältnis zusammengemischt worden sind.

4. Verfahren nach einem der vorstehenden Ansprüche, dadurch gekennzeichnet, daß die Konzentration des Sauerstoffgases in dem inerten Gas im Bereich von 0,5% bis 1% liegt.

5. Verfahren nach einem der vorstehenden Ansprüche, dadurch gekennzeichnet, daß der Strom des inerten Gases dadurch hergestellt wird, daß Stickstoffgas durch Druckschwingungsadsorption oder mit Membranen von Luft abgetrennt wird.

6. Verfahren nach einem der vorstehenden Ansprüche, dadurch gekennzeichnet, daß der Strom des inerten Gases durch die Reaktion auf etwa 160°C erhitzt wird.

7. Lötvorrichtung, umfassend eine etwa Raumtemperatur aufweisende Quelle (1) eines inerten Gases, das eine gasförmige Verunreinigung enthält; eine etwa Raumtemperatur aufweisende Wasserstoffquelle (4); einen Behälter (5), der einen mit beiden Quellen in Verbindung stehenden Oxidationskatalysator enthält, um dadurch bei Betrieb eine Reaktion der gasförmigen Sauerstoffverunreinigung in dem inerten Gas mit dem Wasserstoffgas zur Entfernung von der Gesamtmenge oder einem Teil des Sauerstoffgases aus dem inerten Gas durchzuführen und die Temperatur des Gases zu steigern, eine Lötkammer (3), die mit dem Auslaß des Containers (5) in Verbindung steht, und Mitteln zum Einlassen des erhitzten Gases in die Lötkammer (3), dadurch gekennzeichnet, daß der Katalysator so konfiguriert ist, daß die Temperatur des Gases im wesentlichen auf die Temperatur, die während eines nachfolgenden Lötschrittes erforderlich ist, durch im wesentlichen die Hitze erhöht wird, die während der Reaktion erzeugt wird, und durch Mittel zum Einführen des erhitzten Gases in die Kammer (3), um die darin angeordneten Komponenten zu erhitzen.

8. Vorrichtung nach Anspruch 7, dadurch gekennzeichnet, daß die Quelle des inerten Gases ein PSA oder membranartiger Stickstoffgenerator (1,4) ist.

**Revendications**

1. Procédé de brasage destiné à braser des composants dans une atmosphère chauffée et sensiblement dépourvue d'oxygène, qui comprend les étapes consistant à former un courant de gaz inerte (1) contenant comme impureté de l'oxygène gazeux et un courant d'hydrogène gazeux (4), tous deux approximativement à la température ambiante, à faire passer les courants dans un récipient (5) contenant un catalyseur d'oxydation de manière à conduire une réaction de l'oxygène gazeux présent comme impureté dans le gaz inerte avec l'hydrogène gazeux, afin d'éliminer du gaz inerte (1) la totalité ou une partie de l'oxygène gazeux, caractérisé en ce que la température du gaz est élevée jusqu'à la valeur requise pendant une étape ultérieure de brasage principalement par la chaleur générée pendant la réaction et le gaz chauffé en question est introduit dans un appareil de brasage pour chauffer des composants qui y sont situés.

2. Procédé selon la revendication 1, caractérisé en ce que le catalyseur (5) est un catalyseur à base de métal noble.

3. Procédé selon la revendication 1 ou la revendication 2, dans lequel le gaz inerte et l'hydrogène gazeux sont introduits dans le récipient (5) du catalyseur après avoir été mélangés ensemble dans un rapport prédéterminé.

4. Procédé selon l'une quelconque des revendications précédentes, caractérisé en ce que la concentration de l'oxygène gazeux dans le gaz inerte se situe dans la plage de 0,5% à 1%.

5. Procédé selon l'une quelconque des revendications précédentes, caractérisé en ce que le courant de gaz inerte est formé par séparation d'azote de l'air par adsorption sous pression alternante ou avec des membranes.

6. Procédé selon l'une quelconque des revendications précédentes, caractérisé en ce que le courant de gaz inerte est chauffé jusqu'à environ 160°C du fait de la réaction en question.

7. Appareil de brasage, comprenant une source (1), approximativement à la température ambiante, d'un gaz inerte contenant une impureté gazeuse ; une source d'hydrogène (4) approximativement à la température ambiante ; un récipient (5) logeant un catalyseur d'oxydation en communication avec les deux sources de manière à conduire, en fonctionnement, une réaction de l'oxygène gazeux présent comme impureté dans le gaz inerte avec l'hydrogène gazeux afin d'éliminer du gaz inerte la totalité ou une partie de l'oxygène gazeux et d'élever la température du gaz, une chambre de brasage (3) en communication avec la sortie du récipient (5) en question et des moyens permettant d'introduire le gaz chauffé dans la chambre de brasage (3), caractérisé en ce que le catalyseur a une configuration permettant d'élever la température du gaz sensiblement à la valeur requise pendant une étape ultérieure de brasage principalement par la chaleur générée pendant la réaction et par des moyens permettant d'introduire le gaz chauffé dans la chambre (3) pour chauffer les composants qui y sont situés

8. Appareil suivant la revendication 7, caractérisé en ce que la source de gaz inerte est un générateur d'azote (1, 4) du type PSA ou du type à membranes.

# Fig.1

# Fig.2

Fig.3

TEMPERATURE (°C)

PREHEATING PERIOD

230°C
205°C

① SUBSTRATE

② PARTS LEAD WIRE

TIME (min)

EP 0 547 860 B1

# Fig. 4